# EUROPÄISCHE PATENTANMELDUNG

(11) **EP 3 012 596 A1**
(43) Veröffentlichungstag der Anmeldung: **27.04.2016**
(21) Anmeldenummer: 14189690.2
(22) Anmeldetag: 21.10.2014
(51) Int. Cl.: G01F 1/684

(54) **Messeinrichtung zur Bestimmung der Fließgeschwindigkeit eines Mediums in einem Rohr**

(71) Anmelder: wenglor fluid GmbH, 88069 Tettnang (DE)
(72) Erfinder: Martin Leupold, 88069 Tettnang (DE); Markus Messmer, 88069 Tettnang (DE)
(74) Vertreter: Engelhardt & Engelhardt

(57) **Zusammenfassung**

Bei einer kalorimetrischen Messeinrichtung (1) zur Bestimmung der Fließgeschwindigkeit eines ein Rohr (2) durchströmendes Medium (3), bestehend aus
- einer Trägerplatte (5), die in eine in das Rohr (2) eingearbeitete Durchgangsöffnung (12) eingesetzt und gasdicht mit diesem verbunden ist,
- einer auf der Trägerplatte (5) aufgedruckten Schicht aus Dielektrikum (6), die auf der dem Medium (3) abgewandten Oberfläche der Trägerplatte (5) vorgesehen ist und diese ganz oder teilweise bedeckt,
- mindestens einem Temperaturmesssensor (8), der auf der Oberseite der Dielektrikum-Schicht (6) oder in dieser eingebettet angeordnet ist und der zwei von außen zugängliche Kontaktflächen (9) aufweist, die mit elektrischen Leitungen (10) verbunden sind und
- einer elektrischen Steuer- und Auswerteeinheit (11), die elektrisch mit dem jeweiligen Temperaturmesssensor (8) gekoppelt ist, soll durch die Messeinrichtung (1) eine zuverlässige und exakte Bestimmung der Fließgeschwindigkeit des Mediums (2) in einem Rohr (3) unabhängig von der Einbausituation und der Ausrichtung, der die Messeinrichtung (1) bildenden Bauteil durchführbar sein.

Diese Aufgabe ist dadurch gelöst, dass benachbart zu dem jeweiligen Temperaturmesssensor (8) ein Heizwiderstandselement (7), vorzugsweise in Form einer Leiterbahn, angeordnet ist, dass das Heizwiderstandselement (7) über zwei Kontaktflächen (9) und elektrischen Leitungen (10) mit einer Stromquelle und der Steuer- und Auswerteeinheit (11) verbunden ist, dass durch die Steuereinheit (11) das Heizwiderstandeselement (7) impulsweise bestrombar ist und dass durch die Steuer- und Auswerteeinheit (11) die gemessenen Temperaturen des Mediums (3) in Abhängigkeit von dessen Dichte, Viskosität und / oder den geometrischen Abmessungen des Rohres (2) und dessen Materialbeschaffenheit in eine physikalische Größe übertragbar ist, durch die die Fließgeschwindigkeit des Mediums (3) in dem Rohr (2) bestimmbar ist.

## Beschreibung

Die Erfindung bezieht sich auf eine Messeinrichtung zur Bestimmung der Fließgeschwindigkeit eines Mediums in einem Rohr nach dem Oberbegriff des Patentanspruches 1.

Aus der WO 2012/007922 A1 ist eine solche Messeinrichtung zu entnehmen, durch die mit Hilfe eines Druckmesssensors die Fließgeschwindigkeit eines Mediums in Abhängigkeit von erzeugten Druckschwankungen bestimmt ist. Die erzeugten Druckschwankungen werden mittels elektrischen Signalen ausgewertet, so dass über die Druckschwankungen und die derart veränderten elektrischen Signalen Aufschlüsse gezogen werden können, welche Fließgeschwindigkeit das Medium in einem Rohr aufweist.

Nachteiligerweise sind die Druckmesssensoren sowie die erforderlichen elektrischen Druckmesssensoren exakt in der Fließrichtung oder in Längsrichtung des Rohres des Mediums anzuordnen und zu positionieren. Ein fehlerhafter oder ungenauer Einbau der Messeinrichtung in dem Rohr führt zu erheblichen Messfehlern. Die eingeleiteten Druckimpulse sind nämlich durch die Strömungsgeschwindigkeit und die Strömungsrichtung des Mediums an die elektrischen Messsensoren weiterzuleiten. Wenn folglich die die Druckschwankungen erzeugenden Membranen und die elektrischen Messsensoren nicht exakt in Strömungsrichtung erreichen, können keine aussagekräftigen Rückschlüsse auf das Strömungsverhalten des Mediums errechnet werden.

Durch die WO 2011/141886 A2 ist ein Drucksensor beschrieben, der einen andersartigen konstruktiven Aufbau zwar aufweist, jedoch die identischen technischen Nachteile beinhaltet, wie die Messeinrichtung nach der WO 2012/007922 A1.

In Abhängigkeit von den Innenquerschnitten der verwendeten Rohre entstehend insbesondere in der Nähe der Rohrwandung Verwirbelungen in dem Medium, durch die die Fließgeschwindigkeit reduziert und abgelenkt ist. Gerade bei sehr kleinen Innenquerschnitten der Rohre führen solche Verwirbelungen dazu, dass die in das Medium eingeleiteten Druckimpulse nicht exakt in Strömungsrichtung des Mediums an die Druckauswertesensoren gelangen, wodurch erhebliche Messungenauigkeiten entstehen.

Ein anderes Messkonzept ist der DE 196 10 885 B4 zu entnehmen. Dort umfasst eine Messeinrichtung ein Heizwiderstandselement und einen Temperaturmesssensor, der über einen wärmeleitenden Trennkörper und einen in das Medium hineinragenden Messkopf Energie an das vorbeiströmende Medium leitet.

Nachteiligerweise ist das Heizwiderstandselement derart weit von dem vorbeiströmenden Medium beabstandet und durch mehrere zwar wärmeleitende Trennschichten von diesem getrennt durch die Wärmeübertragung verzögernden Bauteile, so dass aufgrund dieser zeitlichen Verzögerung des Wärmeübergangs Messfehler entstehen bzw. Messmethode anzuwenden ist, die eine längere Heizperiode aufweist und erst nach einer bestimmten Bestromung des Heizwiderstandselementes tatsächlich zuverlässige Messergebnisse liefert, denn erst nach einer bestimmten Zeitperiode ist eine Erwärmung des vorbeiströmenden Mediums feststellbar und messbar.

Aufgrund der zu verwendenden Messmethode ist jedoch eine zeitunabhängige Messung der Fließgeschwindigkeit des vorbeiströmenden Mediums nicht oder nur in vorgegebenen langen Zeitintervallen möglich.

Es ist daher Aufgabe der Erfindung, eine Messeinrichtung der eingangs genannten Gattung bereitzustellen, durch die zum einen eine zuverlässige und exakte Bestimmung der Fließgeschwindigkeit eines Mediums in einem Rohr unabhängig von der Einbausituation und der Ausrichtung der die Messeinrichtung bildenden Bauteile erfolgt und die zum anderen Messwerte generiert, durch die eine Bestimmung der Fließgeschwindigkeit des Mediums ermöglicht ist, die auf einfach zu bestimmenden, vorgegebenen und zu messenden geometrischen oder physikalische Werte oder Innenquerschnitte basiert und die für beliebige Rohre geeignet ist.

Diese Aufgaben sind erfindungsgemäß durch die Merkmale des kennzeichnenden Teils von Patentanspruch 1 gelöst.

Weitere vorteilhafte Weiterbildungen der Erfindung ergeben sich aus den Unteransprüchen.

Dadurch, dass benachbart zu dem jeweiligen Temperaturmesssensor ein Heizwiderstandselement, vorzugsweise in Form einer Leiterbahn, angeordnet ist, und dadurch, dass das Heizwiderstandselement über zwei Kontaktflächen und elektrischen Leitungen mit einer Stromquelle und der Steuer- und Auswerteeinrichtung verbunden ist, dadurch, dass durch die Steuereinheit das Heizwiderstandselement impulsweise bestrombar ist, und dadurch, dass durch die Steuer- und Auswerteeinheit die gemessenen Temperaturen des Mediums in Abhängigkeit von dessen Dichte, Viskosität und/oder den geometrischen Abmessungen des Rohres sowie dessen Material-beschaffenheit in eine physikalische Größe übertragbar ist, durch die die Fließgeschwindigkeit des Mediums in dem Rohr bestimmbar ist, kann aufgrund der Temperaturabgabe des Mediums dessen Fließgeschwindigkeit errechnet werden, ohne dass die Temperaturmesssensoren exakt zu der Fließrichtung des Mediums auszurichten sind. Durch die Bestromung des Heizwiderstandselementes erwärmt sich nämlich die Trägerplatte impulsweise und das daneben vorbei fließende Medium wird in Abhängigkeit von der Bestromungsdauer und der eingebrachten Energiezufuhr aufgeheizt, wodurch sich physikalische Rückschlüsse auf die Fließgeschwindigkeit des Mediums errechnen lassen, in dem nach dem Abschalten des Heizwiderstandselementes der Temperaturabfall in Abhängigkeit von der Zeit durch den Temperatursensor gemessen ist, wodurch sich physikalische Werte ergeben, die in einer mathematischen Beziehung zu der tatsächlich vorherrschenden Fließgeschwindigkeit des Mediums stehen. Je schneller nämlich das Medium an dem Temperatursensor vorbeifließt, desto schneller fällt der gemessene Temperaturwert und umgekehrt. Es ist allerdings erforderlich, dass das Medium eine bestimmte Mindestfließgeschwindigkeit und ein möglichst laminares Strömungsverhalten aufweist, denn bei solchen Strömungsbedingungen entstehen die physikalischen bzw. mathematischen Beziehungen zwischen dem Temperaturentzug und der Strömungsgeschwindigkeit des Mediums.

Es ist besonders vorteilhaft, die Innenkontur der Trägerplatte möglichst in der Rohrmitte anzuordnen, da in der Rohrmitte die größte Strömungsgeschwindigkeit des Mediums üblicherweise vorherrscht. In der Nähe von der Rohrwand wird das Medium abgebremst, so dass die Trägerplatte der Messeinrichtung möglichst im Zentrum des Rohres zu positionieren ist. Dabei kann die Außenkontur der Trägerplatte eine möglichst strömungsgünstige Form aufweisen, beispielsweise als Kalotte oder konkav bzw. konvex gekrümmte Fläche ausgestaltet sein.

Da die jeweiligen elektrischen Bauteile, wie Temperaturmesssensoren und Heizwiderstandselemente, in einem identischen Abstand zu dem Medium angeordnet sind und räumlich voneinander getrennt sind, sind diese elektrisch isoliert, werden die Wärmeübergangszeiten zwischen dem Heizwiderstandselement und dem Medium einerseits und dem Medium und dem Temperaturmesssensor andererseits nicht durch unterschiedliche Distanzen verfälscht. Vielmehr ergeben sich über die Laufzeiten der Wärmeübergänge zwischen den einzelnen Bauteilen und dem Medium lediglich sehr geringe Fehlerabweichungen.

Demnach kann die Messeinrichtung in einer beliebigen Position zu der Strömungsrichtung des Mediums in das Rohr eingebaut werden; eine komplizierte und exakte Positionierung der Messeinrichtung zu der Fließrichtung des Mediums ist folglich nicht notwendig. Darüberhinaus lassen sich mit Hilfe der erfindungsgemäßen Messeinrichtung exakte physikalische Messgrößen errechnen, die zum einen von der Temperatur des Mediums und zum anderen durch die Temperaturveränderungen mit der Fließgeschwindigkeit des Mediums in unmittelbarer physikalischer Verbindung stehen.

In der Zeichnung ist ein erfindungsgemäßes Ausführungsbeispiel einer Messeinrichtung zu entnehmen, die nachfolgend näher erläutert ist. Im Einzelnen zeigt:
- Figur 1: eine Messeinrichtung, bestehend aus einer Trägerplatte und einer auf der Trägerplatte aufgedruckten Dielektrikum-Schicht, in die ein Temperaturmesssensor und ein Heizwiderstandselement mit jeweils zwei Kontaktflächen, die über elektrische Leitungen mit einer Steuer- und Auswerteeinheit verbunden sind und die in einem Rohr, durch das ein Medium strömt, eingesetzt ist, in Seitenansicht,
- Figur 2a: die Messeinrichtung gemäß Figur 1, in vergrößerter Darstellung,
- Figur 2b: die Messeinrichtung gemäß Figur 2a, in Draufsicht,
- Figur 3: die Messeinrichtung gemäß Figur 1, mit einer konkav nach außen gekrümmten Trägerplatte, die in das Innere des Rohres eintaucht und
- Figur 4: ein schematisches Schaltbild der Messeinrichtung gemäß den Figuren 1 bis 3.

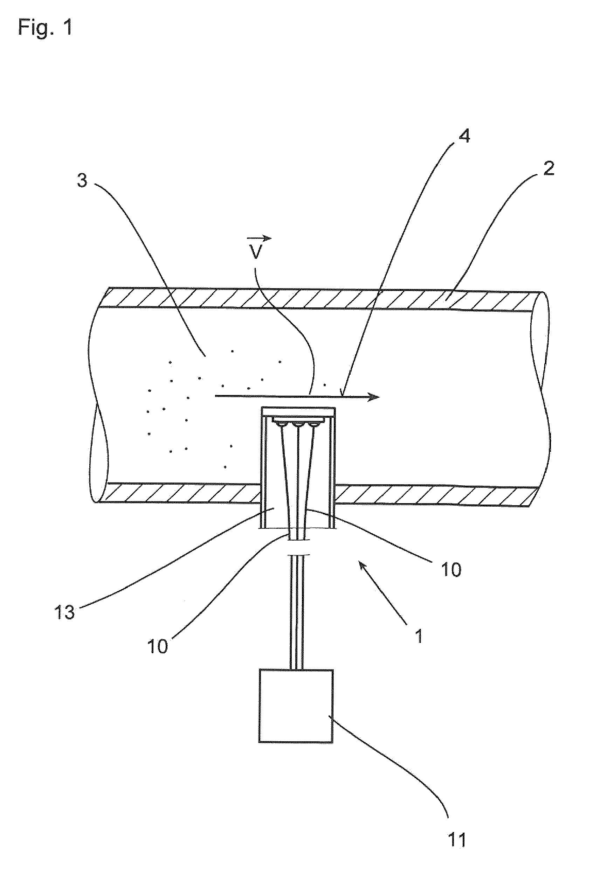

In Figur 1 ist eine kalorimetrische Messeinrichtung 1 zur Bestimmung der Fließgeschwindigkeit eines in einem Rohr 2 vorhandenen Mediums 3 zu entnehmen. Das Medium 3 weist eine vorgegebene Strömungsrichtung 4 auf, die schematisch mit Hilfe eines Strömungspfeiles wiedergegeben ist. Das Medium 3 kann sowohl aus einer Flüssigkeit, einem Gas oder einem Flüssigkeits-Gas-Gemisch bestehen. Die Dichte und Viskosität des jeweiligen Mediums 3 ist bekannt; darüberhinaus sind die geometrischen Abmessungen und die Materialbeschaffenheit des Rohres 2 vorgegeben.

Die Messeinrichtung 1 besteht aus einer Trägerplatte 5, die in eine in das Rohr 2 eingearbeitete Durchgangsöffnung 12 eingesetzt ist. Auf der dem Medium 3 abgewandten Oberfläche der Trägerplatte 5 ist eine Schicht aus einem Dielektrikum 6 aufgedruckt oder aufgebracht. Die Dielektrikum-Schicht 6 überzieht demnach eine der beiden Oberflächen der Trägerplatte 5 und isoliert diese. Auf der Dielektrikum-Schicht 6 ist nach Art einer Sandwichbauweise ein Heizwiderstandselement 7 in Form einer rechteckförmigen geschlossenen Leiterbahn aus einem wärmeleitenden und wärmeabgebenden Werkstoff vorgesehen. Die Leiterbahn 7 kann vollständig von einer weiteren Dielektrikum-Schicht 6 abgedeckt sein; allerdings sind mindestens zwei Kontaktflächen 9 vorzusehen, die von außen zugänglich sind, also von der Dielektrikum-Schicht 6 nicht bedeckt sind, um die Leiterbahn 7 impulsweise zu bestromen.

Mittels elektrischen Leitungen 10 können die Kontaktflächen 9 des Heizwiderstandselementes 7 mit einer nicht dargestellten Stromquelle und einer Steuer- und Auswerteeinheit 11 verbunden sein. Durch die Steuer- und Auswerteeinheit 11 wird die Leiterbahn 7 impulsweise bestromt, so dass während der Bestromungsphase das Heizwiderstandselement 7 aufgeheizt ist, wodurch sich die Umgebung unmittelbar benachbart zu der Trägerplatte 5 erwärmt. Diese Wärmeenergie wird über die Die-lektrikum-Schicht 6 und die Trägerplatte 5 an das an der Trägerplatte 5 vorbeiströmende Medium 3 übertragen, so dass dieses eine Energiezufuhr in Form einer Erwärmung erfährt.

Auf der Dielektrikum-Schicht 6 ist darüberhinaus mindestens ein Temperaturmesssensor 8 vorgesehen, der über zwei von außen zugänglichen Kontaktflächen 9 und den elektrischen Leitungen 10 mit der Steuer- und Auswerteeinheit 11 elektrisch gekoppelt ist. Durch den Temperaturmesssensor 8 wird daher zum einen die Temperaturveränderung bzw. die Temperaturabgabe nach dem Abschalten des Heizwiderstandselementes 7 des Mediums 3 festgestellt und zum anderen ist das entsprechende Messergebnis an die Steuer- und Auswerteeinheit 11 weitergeleitet, so dass eine Vielzahl von Messwerten über eine bestimmte Zeitdauer ausgewertet werden kann. Der Temperaturmesssensor 8 befindet sich in den von der Leiterbahn 7 gebildeten Ebene, also unmittelbar an der Dielektrikum-Schicht 6.

Durch entsprechend hinterlegte Datensätze die das Medium 3, die geometrischen Abmessungen und die Materialbeschaffenheit des Rohres 2 können auf der Grundlage der ermittelten Temperaturmessergebnisse durch den oder die Temperaturmesssensoren 8 physikalische Größen durch die Steuer- und Auswerteeinheit 11 errechnet werden, die in unmittelbarer physikalischer Verbindung mit der Fließgeschwindigkeit des Mediums 3 stehen, so dass aufgrund der gemessenen Temperaturwerte exakt berechenbar ist, welche Fließgeschwindigkeit das Medium 3 im Bereich der Messeinrichtung 1 tatsächlich aufweist. In das vorbeiströmende Medium 3 wird demnach über die aufgeheizte Leiterbahn 7 Energie eingespeist. Sobald die Energiezufuhr durch Abschalten der Bestromung für die Leiterbahn 7 beendet ist, wird der Energieentzug über die Zeit durch den Temperaturmesssensor 8 festgestellt. Aus diesem Energieabfall, der im Prinzip dem Energieentzug aus dem Medium 3 entspricht, können mit Hilfe der vorgenannten geometrischen und physikalischen Parameter mathematisch wiederholbare Berechnungen durchgeführt werden, die im unmittelbaren physikalischen Zusammenhang mit der Fließgeschwindigkeit des Mediums 3 stehen.

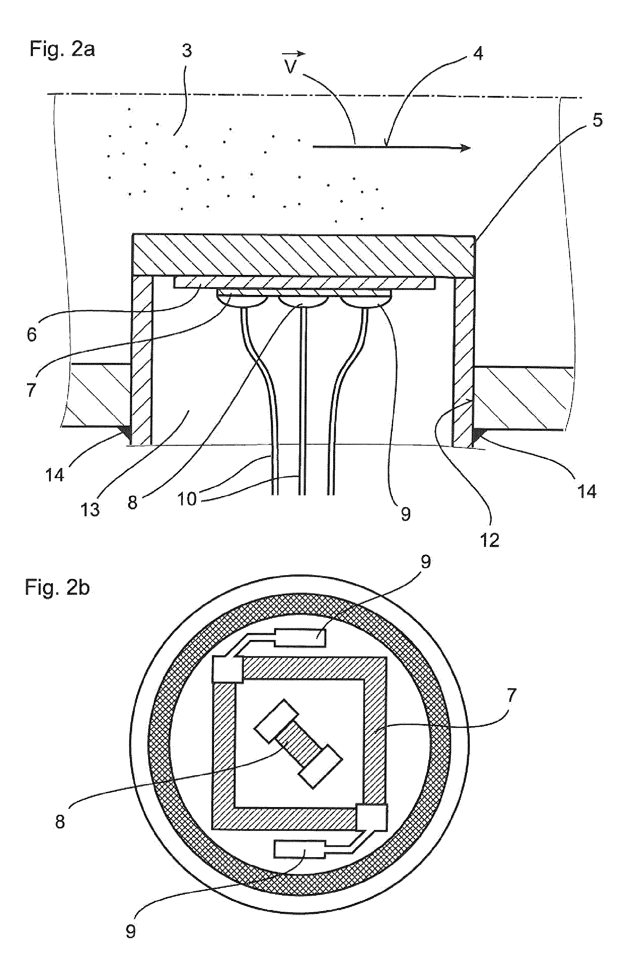

Insbesondere den Figuren 1 und 2a ist zu entnehmen, dass an der umlaufenden Stirnseite oder an der Oberfläche der Trägerplatte 5 auf der die Dielektrikum-Schicht 6 aufgedruckt ist, ein Behälter 13 in Form eines Hohlzylinders oder Rohrstückes angebracht ist, der gasdicht mit der Trägerplatte 5 verbunden ist. Der Behälter 13 kapselt demnach die Dielektrikum-Schicht 6, die darin integrierten Heizwiderstandselemente 7 und die Temperaturmesssensoren 8 sowie die Kontaktflächen 9 und die elektrischen Leitungen 10, so dass diese nicht im unmittelbaren Kontakt mit dem Medium 3 gelangen bzw. stehen.

Der Behälter 13 ist an seinem Außenumfang mittels einer Schweißnaht 14 mit dem Rohr 2 verbunden, so dass die Messeinrichtung 1 lageorientiert und gasdicht mit dem Rohr 2 gekoppelt ist.

Die Schweißnaht 14 kann auch als Klebenaht aus Silikon, einem Harz oder einem sonstigen geeigneten Werkstoff mit den entsprechenden gasdichten Fixierungseigenschaften ausgeführt sein.

Aus Figur 2b ist ersichtlich, dass die Trägerplatte 5 eine runde Außenkontur aufweist, an die sowohl die Innen- und Außenkontur des Behälters 13 als auch die Durchgangsöffnung 12, die in das Rohr 2 eingearbeitet ist, angepasst ist.

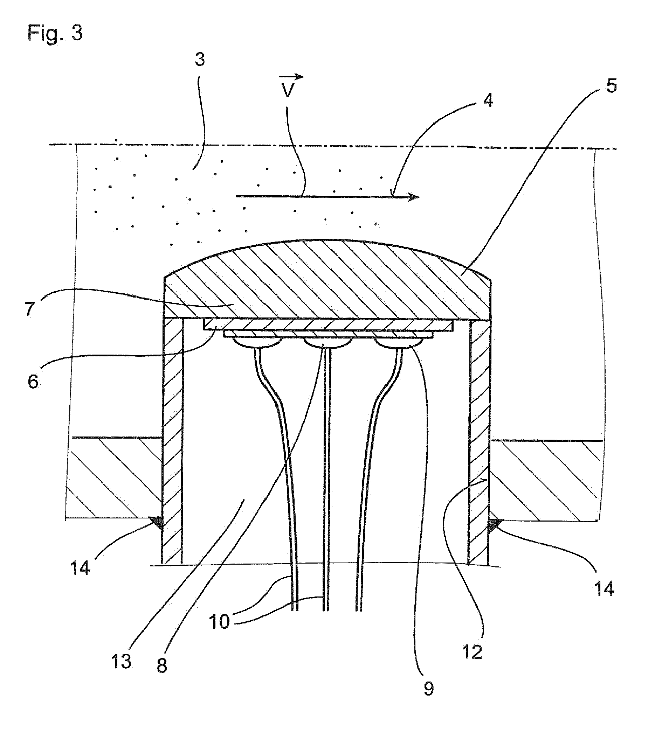

In Figur 3 ist gezeigt, dass das Heizwiderstandselement 7 und der Temperaturmesssensor 8 einen identischen Abstand von dem vorbeiströmenden Medium 3 bzw. der Oberfläche der Trägerplatte 5 einnehmen und auf der Dielektrium-Schicht 6 angebracht sind. Darüberhinaus weist die dem Medium 3 zugewandte Oberseite der Trägerplatte 5 eine nach außen gebogene, also konkav gekrümmte, Oberfläche auf. Somit ist der Übergangsbereich zwischen der Trägerplatte 5 und dem vorbeiströmenden Medium 3 gegenüber einer plan ausgestalteten Trägerplatte 5 nach den Figuren 1 und 2a vergrößert.

Die Trägerplatte 5 ist möglichst zentrumsnah, also im Bereich der Längsachse des Rohres 2, positioniert, da im Zentrum des Rohres 2 die Strömungsgeschwindigkeit des Mediums 2 am größten bemessen ist. Im Bereich der Rohrinnenseite wird nämlich das vorbeiströmende Medium 3 durch die vorherrschenden Reibkräfte gebremst. Die Messeinrichtung 1 soll jedoch die tatsächliche Strömungsgeschwindigkeit im Rohrinneren feststellen.

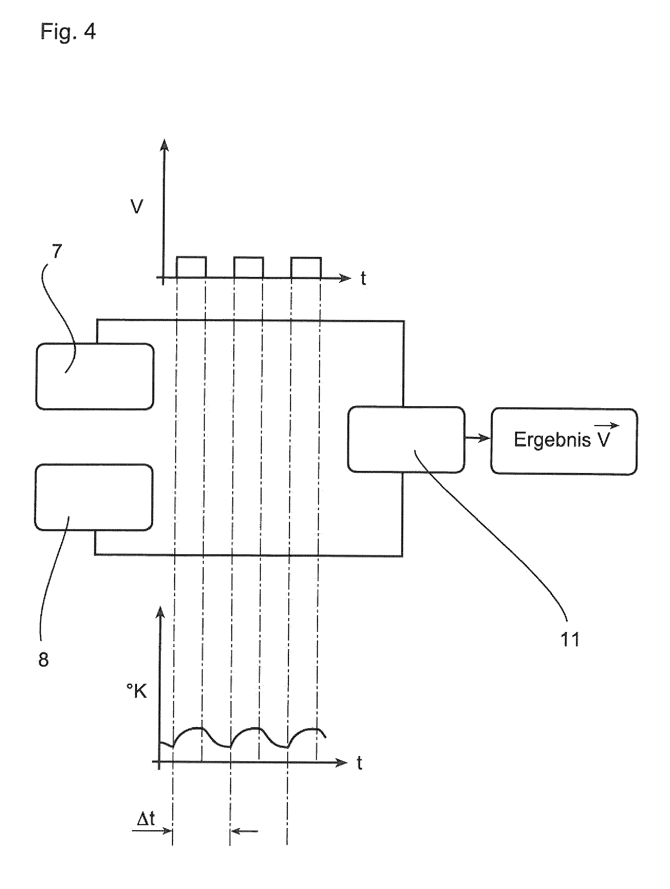

Aus Figur 4 ist zu entnehmen, dass die Steuer- und Auswerteeinheit 11, das jeweilige Heizwiderstandselement 7 impulsweise bestromen. Da der jeweilige Betriebszustand des Heizwiderstandselementes 7 an der Steuer- und Auswerteeinheit 11 bekannt ist, können über die von dem Temperaturmesssensor 8 ermittelten Werte der Temperatur des Mediums 3 in Korrelation bzw. in ein mathematisch-physikalischen Bezug mit der Fließgeschwindigkeit des Mediums 3 gesetzt werden, so dass mit Hilfe der Steuer- und Auswerteeinheit 11 eine zuverlässige und reproduzierbare Bestimmung der Fließgeschwindigkeit des Mediums 3 an der entsprechenden Position der Messeinrichtung 1 ermittelt ist.

Der Innenquerschnitt des Rohres 2 kann rund, elliptisch oder mehreckförmig ausgestaltet sein, wodurch die Messung der Fließgeschwindigkeit jedoch nicht beeinflusst ist.

Die Leiterbahn 7 weist eine geschlossene rechteckförmige Kontur auf, in dessen Zentrum der Temperaturmesssensor 8 angeordnet ist, so dass diese einen konstanten Abstand zu der Leiterbahn 7 einnimmt.

Das Heizwiderstandselement 7 besteht aus einer elektrisch leitfähigen Paste auf der Basis von Edelmetallen, die für den Siebdruck geeignet sind. Solche Pasten weisen insbesondere einen hundertprozentigen Silberanteil auf oder es sind Pasten auf der Basis von Silber mit Palladium (PD) oder Silber mit Palladium (PD) und Platin (PT) geeignet. Darüberhinaus kann auch der Werkstoff Ruthenium für solche Pasten verwendet werden.

## Patentansprüche

1. Kalorimetrische Messeinrichtung (1) zur Bestimmung der Fließgeschwindigkeit eines ein Rohr (2) durchströmendes Medium (3), bestehend aus
- einer Trägerplatte (5), die in eine in das Rohr (2) eingearbeitete Durchgangsöffnung (12) eingesetzt und gasdicht mit diesem verbunden ist,
- einer auf der Trägerplatte (5) aufgedruckten Schicht aus Dielektrikum (6), die auf der dem Medium (3) abgewandten Oberfläche der Trägerplatte (5) vorgesehen ist und diese ganz oder teilweise bedeckt,
- mindestens einem Temperaturmesssensor (8), der auf der Oberseite der Dielektrikum-Schicht (6) oder in dieser eingebettet angeordnet ist und der zwei von außen zugängliche Kontaktflächen (9) aufweist, die mit elektrischen Leitungen (10) verbunden sind und
- einer elektrischen Steuer- und Auswerteeinheit (11), die elektrisch mit dem jeweiligen Temperaturmesssensor (8) gekoppelt ist,
**dadurch gekennzeichnet,**
**dass** benachbart zu dem jeweiligen Temperaturmesssensor (8) ein Heizwiderstandselement (7), vorzugsweise in Form einer Leiterbahn, angeordnet ist, dass das Heizwiderstandselement (7) über zwei Kontaktflächen (9) und elektrischen Leitungen (10) mit einer Stromquelle und der Steuer- und Auswerteeinheit (11) verbunden ist, dass durch die Steuereinheit (11) das Heizwiderstandeselement (7) impulsweise bestrombar ist und dass durch die Steuer- und Auswerteeinheit (11) die gemessenen Temperaturen des Mediums (3) in Abhängigkeit von dessen Dichte, Viskosität und / oder den geometrischen Abmessungen des Rohres (2) und dessen Materialbeschaffenheit in eine physikalische Größe übertragbar ist, durch die die Fließgeschwindigkeit des Mediums (3) in dem Rohr (2) bestimmbar ist.

2. Messeinrichtung (1) nach Anspruch 1,
**dadurch gekennzeichnet,**
**dass** die Trägerplatte (5) im Bereich der Längsachse des Rohres 2 positioniert ist.

3. Messeinrichtung (1) nach Anspruch 1,
**dadurch gekennzeichnet,**
**dass** die dem Medium (3) zugewandte Oberfläche der Trägerplatte (5) konvex oder konkav gekrümmt oder als Halbkugel ausgestaltet ist.

4. Messeinrichtung (1) nach einem der vorgenannten Ansprüche,
**dadurch gekennzeichnet,**
**dass** an der umlaufenden Stirnseite der Trägerplatte (5) ein Behälter (13), der als Hohlkörper ausgestaltet ist, angebracht ist und dass durch den Behälter (13) die Trägerplatte (5) und die daran befestigten Temperaturmesssensoren (8), die Heizwiderstandselemente (7) und die Dielektrikum-Schicht (6) gekoppelt sind.

5. Messeinrichtung (1) nach Anspruch 4,
**dadurch gekennzeichnet,**
**dass** der Behälter (13) fest mit dem Rohr (2), vorzugsweise mittels einer umlaufenden Schweißnaht (14), gasdicht verbunden ist.

6. Messeinrichtung (1) nach einem der vorgenannten Ansprüche,
**dadurch gekennzeichnet,**
**dass** die Trägerplatte (5) eine runde oder mehreckigförmige Außenkontur aufweist.

7. Messeinrichtung (1) nach einem der vorgenannten Ansprüche,
**dadurch gekennzeichnet,**
**dass** der Temperaturmesssensor (8) bzw. die Temperaturmesssensoren (8) und die Leiterbahnen (7) in einer gemeinsamen Ebene angeordnet sind und dass der Abstand zwischen den Temperaturmesssensoren (8), der Leiterbahnen (7) und dem Medium (3) gleichgroß bemessen ist.

8. Messeinrichtung (1) nach einem der vorgenannten Ansprüche,
**dadurch gekennzeichnet,**
**dass** die Leiterbahn (7) eine geschlossene, rechteckförmige Kontur aufweist und dass der Temperaturmesssensor (8) im Zentrum der Leiterbahn (7) angeordnet ist.

9. Messeinrichtung (1) nach einem der vorgenannten Ansprüche,
**dadurch gekennzeichnet,**
**dass** das Heizwiderstandselement aus einer elektrisch leitfähigen Paste auf Basis von Edelmetall besteht, die für den Siebdruck auf Keramiksubstraten geeignet ist.

10. Verfahren zur kalorimetrischen Bestimmung der Fließgeschwindigkeit eines Mediums (3) in einem Rohr (2) mit Hilfe einer Messeinrichtung (1) nach einem der vorgenannten Ansprüche,
**gekennzeichnet durch** die Verfahrensschritte:
- Impulsweises Bestromen eines Heizwiderstandselementes (7),
- Übertragen der derart erzeugten Wärme über die Dielektrikum-Schicht (6) und die Trägerplatten (5) auf das vorbestimmende Medium (3),
- permanentes Messen der Temperatur des Mediums (3) mit Hilfe mindestens eines der Temperaturmesssensoren (8), der benachbart zu dem Heizwiderstandselement (7) angeordnet ist, bzw. sind, und
- Errechnen und Auswerten der Temperaturveränderungen mit Hilfe einer Auswerteeinheit (11), **durch** die anhand der erhaltenen Temperaturwerte die Fließgeschwindigkeit des Mediums (3) angegeben ist, und zwar in Kenntnis der Dichte, Viskosität des Mediums (3) und der geometrischen Abmessungen und Materialbeschaffenheit des Rohres (2).

## Geänderte Patentansprüche

### Geänderte Patentansprüche gemäss Regel 137(2) EPÜ.

1. Kalorimetrische Messeinrichtung (1) zur Bestimmung der Fließgeschwindigkeit eines ein Rohr (2) durchströmendes Medium (3), bestehend aus
- einer Trägerplatte (5), die in eine in das Rohr (2) eingearbeitete Durchgangsöffnung (12) eingesetzt und gasdicht mit diesem verbunden ist,
- einer auf der Trägerplatte (5) aufgedruckten Schicht aus Dielektrikum (6), die auf der dem Medium (3) abgewandten Oberfläche der Trägerplatte (5) vorgesehen ist und diese ganz oder teilweise bedeckt,
- mindestens einem Temperaturmesssensor (8), der auf der Oberseite der Dielektrikum-Schicht (6) oder in dieser eingebettet angeordnet ist und der zwei von außen zugängliche Kontaktflächen (9) aufweist, die mit elektrischen Leitungen (10) verbunden sind,
- einer elektrischen Steuer- und Auswerteeinheit (11), die elektrisch mit dem jeweiligen Temperaturmesssensor (8) gekoppelt ist und
- ein Heizwiderstandselement (7) über zwei Kontaktflächen (9) und elektrischen Leitungen (10) mit einer Stromquelle und der Steuer- und Auswerteeinheit (11) verbunden ist
**dadurch gekennzeichnet,**
**dass** benachbart zu dem jeweiligen Temperaturmesssensor (8)_in einem konstanten und vorgegeben Abstand das Heizwiderstandselement (7), vorzugsweise in Form einer Leiterbahn, angeordnet ist, dass durch die Steuereinheit (11) das Heizwiderstandelement (7) impulsweise bestromt und dem Medium (3) ein Temperatur-Signal aufgeprägt ist,_dass durch den Temperaturmesssensor (8) das Temperatur Signal des Mediums (3) erfasst ist und dass durch die Steuer- und Auswerteeinheit (11) in Abhängigkeit von den Signallaufzeiten des Temperatur-Signals die Fließgeschwindigkeit des Mediums (3) in dem Rohr (2) bestimmt ist.

2. Messeinrichtung (1) nach Anspruch 1,
**dadurch gekennzeichnet,**
**dass** die Trägerplatte (5) im Bereich der Längsachse des Rohres (2) positioniert ist.

3. Messeinrichtung (1) nach Anspruch 1,
**dadurch gekennzeichnet,**
**dass** die dem Medium (3) zugewandte Oberfläche der Trägerplatte (5) konvex oder konkav gekrümmt oder als Halbkugel ausgestaltet ist.

4. Messeinrichtung (1) nach einem der vorgenannten Ansprüche,
**dadurch gekennzeichnet,**
**dass** an der umlaufenden Stirnseite der Trägerplatte (5) ein Behälter (13), der als Hohlkörper ausgestaltet ist, angebracht ist und dass durch den Behälter (13) die Trägerplatte (5) und die daran befestigten Temperaturmesssensoren (8), die Heizwiderstandselemente (7) und die Dielektrikum-Schicht (6) gekoppelt sind.

5. Messeinrichtung (1) nach Anspruch 4,
**dadurch gekennzeichnet,**
**dass** der Behälter (13) fest mit dem Rohr (2), vorzugsweise mittels einer umlaufenden Schweißnaht (14), gasdicht verbunden ist.

6. Messeinrichtung (1) nach einem der vorgenannten Ansprüche,
**dadurch gekennzeichnet,**
**dass** die Trägerplatte (5) eine runde oder mehreckigförmige Außenkontur aufweist.

7. Messeinrichtung (1) nach einem der vorgenannten Ansprüche,
**dadurch gekennzeichnet,**
**dass** der Temperaturmesssensor (8) bzw. die Temperaturmesssensoren (8) und die Leiterbahnen (7) in einer gemeinsamen Ebene angeordnet sind und dass der Abstand zwischen den Temperaturmesssensoren (8), der Leiterbahnen (7) und dem Medium (3) gleichgroß bemessen ist.

8. Messeinrichtung (1) nach einem der vorgenannten Ansprüche,
**dadurch gekennzeichnet,**
**dass** die Leiterbahn (7) eine geschlossene, rechteckförmige Kontur aufweist und dass der Temperaturmesssensor (8) im Zentrum der Leiterbahn (7) angeordnet ist.

9. Messeinrichtung (1) nach einem der vorgenannten Ansprüche,
**dadurch gekennzeichnet,**
**dass** das Heizwiderstandselement aus einer elektrisch leitfähigen Paste auf Basis von Edelmetall besteht, die für den Siebdruck auf Keramiksubstraten geeignet ist.

10. Verfahren zur kalorimetrischen Bestimmung der Fließgeschwindigkeit eines Mediums (3) in einem Rohr (2) mit Hilfe einer Messeinrichtung (1) nach einem der vorgenannten Ansprüche,
**gekennzeichnet durch** die Verfahrensschritte:
- Impulsweises Bestromen eines Heizwiderstandselementes (7),
- Übertragen des derart erzeugten Temperatur-Signals über die Dielektrikum-Schicht (6) und die Trägerplatten (5) auf das vorbestimmende Medium (3),
- permanentes Messen der Temperatur des Mediums (3) mit Hilfe mindestens eines der Temperaturmesssensoren (8), der benachbart in einem vorgegebenen und konstanten Abstand zu dem Heizwiderstandselement (7) angeordnet ist, bzw. sind, und
- Errechnen und Auswerten der Temperatur Signallaufzeiten mit Hilfe einer Auswerteeinheit (11), **durch** die anhand der erhaltenen Signallaufzeiten die Fließgeschwindigkeit des Mediums (3) angegeben ist, und zwar in Kenntnis des Abstandes zwischen dem Heizwiderstandselementes (7) und dem Temperaturmesssensoren (8).
